# EUROPEAN PATENT SPECIFICATION

(11) **EP 2 574 898 B1**
(45) Date of publication and mention of the grant of the patent: **30.05.2018**
(21) Application number: 11183284.6
(22) Date of filing: 29.09.2011
(51) Int. Cl.: G01M 13/02

(54) **A test rig and a method for testing gearboxes**
Prüfstand und Verfahren zum Prüfen von Getrieben
Banc d'essai et procédé de test de boîtes de vitesses

(43) Date of publication of application: 03.04.2013
(73) Proprietor: Moventas Gears Oy, 40701 Jyväskylä (FI)
(72) Inventor: Rummakko, Markku, 40520 Jyväskylä (FI)
(74) Representative: Finnpatent Oy

(56) References cited:
- FR-A- 993 065
- US-A- 2 981 103
- C. Gruescu et al: "Modelling and optimization of multiple closed loop stands for testing gearboxes", , 31 December 2009 (2009-12-31), pages 119-124, XP002668886, Retrieved from the Internet: URL:http://www.anale-ing.uem.ro/2009/2009_ a18.pdf [retrieved on 2012-02-07]
- MIHAILIDIS A ET AL: "A new system for testing gears under variable torque and speed", RECENT PATENTS ON MECHANICAL ENGINEERING NOVEMBER 2009 BENTHAM SCIENCE PUBLISHERS B.V. NLD, vol. 2, no. 3, November 2009 (2009-11), pages 179-192, XP002668887, DOI: DOI:10.2174/1874477X10902030179

## Description

### Field of the invention

The invention relates to a test rig for gearboxes and to a method for testing a gearbox. More particularly, the invention relates to a test rig that is based on a mechanical closed power loop where a drive motor has to supply only the mechanical losses of the test rig and the gearbox under test.

### Background

The requirements set to modern gearboxes are many times challenging to meet. The gearboxes should be efficient, strong, sufficiently small, quiet, and easy to manufacture. Furthermore, the gearboxes should be cost effective. Despite the progress made in the last years regarding the analysis and simulation, experiments are still essential. There are many modes of failure that may appear when the load carrying capacity of a gearbox is exceeded. Tooth breakage, pittings and micro-pittings as well as excessive wear or even scuffing are the potential problems. Besides the load carrying capacity, there are also other important parameters like efficiency and dynamic behavior that need to be experimentally investigated. Therefore, test rigs that allow gearboxes to operate under predefined speed and torque conditions are needed.

A straightforward way to design such a test rig is to place a gearbox under test between a motor and a brake. This arrangement has, however, many disadvantages. Firstly, the motor has to be dimensioned to supply all the power under which the gearbox has to be tested. Secondly, the brake has to be dimensioned to be capable of receiving all the power. High installation costs and high energy consumption are the result. A more advantageous way to test gearboxes is to include the gearbox under test in a closed power loop, which can be either electrical or mechanical. In the first case, an electric motor drives the input shaft of the gearbox under test and the output shaft of the gearbox is coupled to a generator that feeds the power back to an electrical network. In this way, the total energy consumption is significantly reduced. However, there is a drawback of the big size of both of the motor and generator because they have to be dimensioned according to the maximum testing power. In the second case, the test rig comprises a gear system connectable to the input and output shafts of the gearbox under test and a power transmission shaft such that mechanical power is capable of flowing in a mechanical closed power loop constituted by the gear system, the gearbox under test, and the power transmission shaft. A drive motor is used to rotate the system. The test rig based on the mechanical closed power loop provides significant advantages. Installation cost is significantly reduced, since no generator or brake is needed and the drive motor has to be rated according only to the mechanical power loss taking place in the mechanical closed power loop. Challenges of the test rigs based on the mechanical closed power loop are related, among others, to the size, the weight, and the costs of the power transmission mechanism needed for providing the mechanical closed power loop together with the gearbox under test.

Publications US3112643, FR993065, and Athanassios Mihailidis et al: "A New System for Testing Gears Under Variable Torque and Speed", Recent Patents of Mechanical Engineering 2009, 2, 179-192, Bentham Science Publishers Ltd disclose test rigs based on a mechanical closed power loop. The gear system and the power transmission shaft of these test rigs have to be designed for the maximum testing power of the gearbox under test. Thus, the size, the weight, and the costs of the gear system and the power transmission shaft of these test rigs may be challenging factors in practical test rig implementations.

Publication C. Gruescu et al: "*Modelling and optimization of multiple closed loop stands for testing gearboxes*", ANALELE UNIVERSITÄTII, "EFTIMIE MURGU" RESITA, ANUL XVI, NR. 1, 2009, ISSN 1453-7397 discloses a test rig having two mechanical closed power loops for testing three gearboxes at the same time in order to increase the efficiency of the testing process. The test rig comprises elements which are stressed by all the three gearboxes under test. These elements have to be dimensioned to endure the combined maximum power of the gearboxes under test. Thus, the size, the weight, and the costs of these elements may be challenging factors in practical test rig implementations.

Publication US2981103 discloses a test rig which comprises two mechanical closed power loops when the gearbox under test has three shafts connected to the test rig, and one mechanical closed power loop when the gearbox under test has two shafts connected to the test rig. Hence, the test rig comprises an ordinary mechanical closed power loop for each pair of shafts of the gearbox under test.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.
In accordance with the first aspect of the present invention, there is provided a new test rig for testing a gearbox. The test rig according to the invention comprises:
- a gear system comprising rotatable connection interfaces suitable for being connected to input and output shafts of the gearbox under test,
- at least two power transmission shafts constituting, together with the gear system and the gearbox under test, at least two mechanical closed power loops,
- at least one drive motor for driving the at least two mechanical closed power loops, and
- loading equipment for imposing test torque to the gearbox under test,
wherein the at least two mechanical closed power loops are formed when the gearbox under test is the only device under test connected to the test rig and only one input shaft of the gearbox under test and only one output shaft of the gearbox under test are connected to the rotatable connection interfaces of the gear system.

As there is more than one mechanical closed power loop, the power rating of the power transmission mechanism of each mechanical closed power loop can be significantly smaller than the maximum testing power of the gearbox under test. In many practical installations, it is easier, more room saving, and more cost effective to construct several smaller power transmission mechanisms than a single big power transmission mechanism.
In accordance with the second aspect of the present invention, there is provided a new method for testing a gearbox. The method according to the invention comprises:
- connecting input and output shafts of the gearbox under test to rotatable connection interfaces of a test rig,
- forming at least two mechanical closed power loops with the aid of at least two power transmission shafts constituting, together with a gear system of the test rig and the gearbox under test, the at least two mechanical closed power loops,
- driving the at least two mechanical closed power loops so as to supply mechanical power losses to the mechanical closed power loops, and
- imposing test torque to the gearbox under test,
wherein the at least two mechanical closed power loops are formed when the gearbox under test is the only device under test connected to the test rig and only one input shaft of the gearbox under test and only one output shaft of the gearbox under test are connected to the rotatable connection interfaces of the test rig.
A number of exemplifying embodiments of the invention are described in accompanied dependent claims.
Various exemplifying embodiments of the invention both as to constructions and to methods of operation, together with additional objects and advantages thereof, will be best understood from the following description of specific exemplifying embodiments when read in connection with the accompanying drawings.

The verb "to comprise" is used in this document as an open limitation that neither excludes nor requires the existence of unrecited features. The features recited in depending claims are mutually freely combinable unless otherwise explicitly stated.

### Brief description of the figures

The exemplifying embodiments of the invention and their advantages are explained in greater detail below in the sense of examples and with reference to the accompanying drawings, in which:
figure 1 illustrates the principle of a test rig according to an embodiment of the invention for testing a gearbox,
figure 2 illustrates the principle of a test rig according to another embodiment of the invention for testing a gearbox,
figure 3 shows a schematic illustration of a test rig according to an embodiment of the invention for testing a gearbox, and
figure 4 shows a flow chart of a method according to an embodiment of the invention for testing a gearbox.

### Description of the embodiments

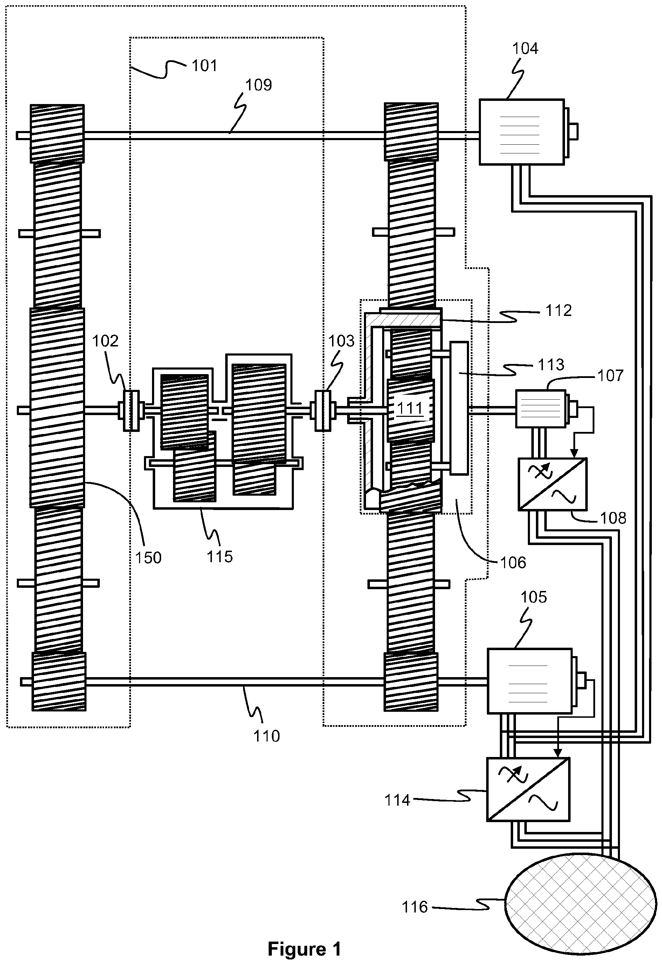

Figure 1 illustrates the principle of a test rig according to an embodiment of the invention for testing a gearbox 115. The test rig comprises a gear system 101 and power transmission shafts 109 and 110. The gear system comprises rotatable connection interfaces 102 and 103, e.g. flanges, suitable for being connected to should be noted that the planetary gear is not the only possible choice for the differential gear stage. The differential gear stage can also be, for example, a spur-gear differential or a differential gear based on bevel gears. It is also possible that in the place of a gearwheel 150 there is a differential gear stage instead of or in addition to the differential gear stage 106. Hence, the number of the differential gear stages can be 1 or 2 depending on the most economical way to implement a test rig having a wide enough area of gear ratios suitable for different gearboxes to be tested.

In the test rig illustrated in figure 1, the loading equipment further comprises a controlling device connected to the third rotatable element 113 of the differential gear stage and arranged to control torque acting on the third rotatable element when the third rotatable element is rotating. By controlling the torque acting on the third rotatable element 113 it is possible to control the test torque imposed to the gearbox 115 under test. The controlling device comprises an electrical machine 107 and an electrical converter device 108. The electrical converter is arranged to control the electrical machine 107 on the basis of a difference between the torque of the electrical machine and a reference torque. In a test rig according to an exemplifying embodiment of the invention, the electrical converter device 108 is arranged to change the reference torque in response to a situation in which the rotational speed of the electrical machine 107 meets an upper speed limit or a lower speed limit. The reference torque is changed in the direction that the rotational speed is returned to a speed window defined with the upper and lower speed limits.

The electrical machine 107 can be an alternating current "AC" electrical machine and the electrical converter device 108 can be a frequency converter that is connected to a three-phase power supply network 116. An AC-electrical machine can be, for example, an induction machine or a permanent magnet synchronous machine. In order to achieve good control accuracy, the frequency converter can be arranged use vector control that is based on controlling not only frequency and amplitudes of voltages and currents but also instantaneous phases of the voltages and currents. Especially, if a tachometer is used, very good control accuracy is achievable. The electrical machine could as well be a direct current "DC" electrical machine and the converter device could be an AC-to-DC converter, e.g. a thyristor converter. In some applications, the controlling device connected to the third rotatable element 113 of the differential gear stage could be a simple brake but an inherent drawback of a brake is that it can produce only torque that is acting against a direction of rotation. An electrical machine can produce torque in both directions depending on whether the electrical machine operates as a motor or as a generator.

In a test rig according to an embodiment of the invention, the drive motors 104 and 105 that are arranged to drive the mechanical closed power loops are electrical motors that are supplied and controlled with an electrical converter device 114 arranged to control rotational speed of the electrical motors on the basis of a difference between the rotational speed of the electrical motors and a reference speed. In the exemplifying case shown in figure 1, the motors 104 and 105 are alternating current electrical motors and the electrical converter device 114 is a frequency converter. In order to achieve good speed control accuracy, the converter device 114 can be arranged use the vector control. Especially, if a tachometer is used, it is possible to achieve very good speed control accuracy. It is also possible that the electrical motor is an AC-electrical motor that is directly connected to the power supply network 116. In this case, the rotational speeds of the motors 104 and 105 are determined by the frequency of the supply network but there can be significant fluctuations in the rotational speeds when there are dynamical changes in instantaneous loading conditions.

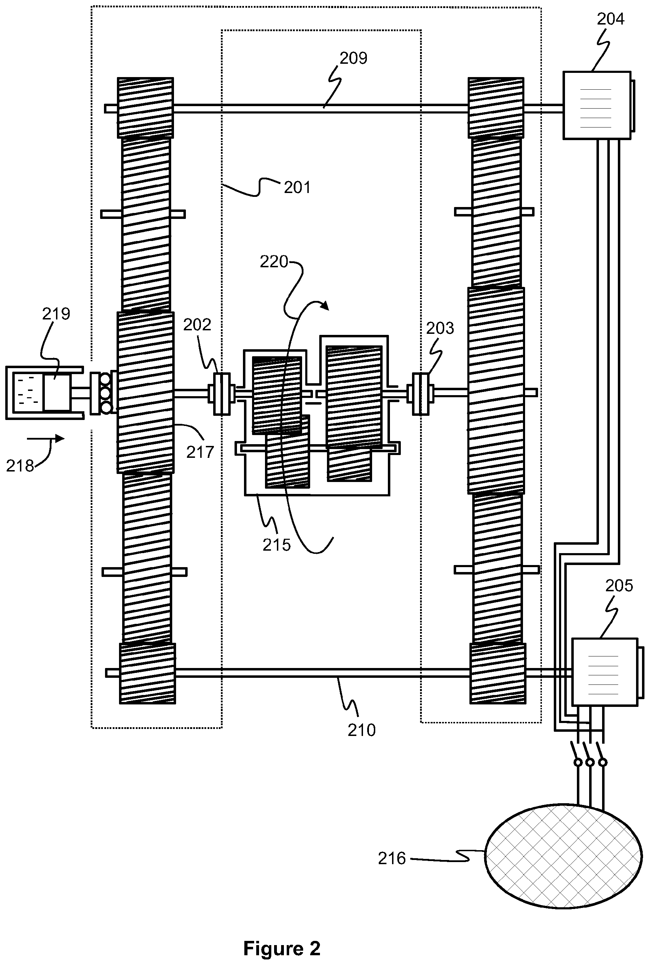

Figure 2 shows a schematic illustration of a test rig according to another embodiment of the invention for testing a gearbox 215. The test rig comprises a gear system 201 and power transmission shafts 209 and 210. The gear system comprises rotatable connection interfaces 202 and 203, e.g. flanges, suitable for being connected to input and output shafts of the gearbox 215 under test. The gear system 201 and the power transmission shafts 209 and 210 constitute together with the gearbox 215 under test two mechanical closed power loops as illustrated in figure 2. The test rig comprises also drive motors 204 and 205 supplied by the three-phase power supply network 216 and arranged to drive the mechanical closed power loops. Furthermore, the test rig comprises loading equipment for imposing test torque to the gearbox 215 under test.

In the test rig illustrated in figure 2, the loading equipment comprises a hydraulically operated piston 219 for pushing an obliquely toothed gearwheel 217 in its axial direction. The pushing direction is illustrated with the arrow 218 in figure 2. As the gearwheel 217 is obliquely toothed, an axial movement with respect to its neighboring gearwheels causes rotation and thus imposes torque to the gearbox 215 under test. It is also possible to generate the test torque by turning the whole gearbox 215 under test as illustrated by the arrow 220 in figure 2. The gearbox under test can be turned e.g. with the aid of a hydraulically operated piston. This method is, however, not suitable for a gearbox whose gear ratio is 1:1. Furthermore, if the input and output shafts of the gearbox under test are not in the same spatial line, cardan joints or other suitable means are needed for compensating the radial movement of at least one of the input and output shafts. It is also possible to have two gearboxes in a back-to-back connection between the rotatable connection interfaces 202 and 203. The test torque can be imposed to these two gearboxes under test by turning the gearboxes in mutually opposite directions with e.g. hydraulically operated pistons.

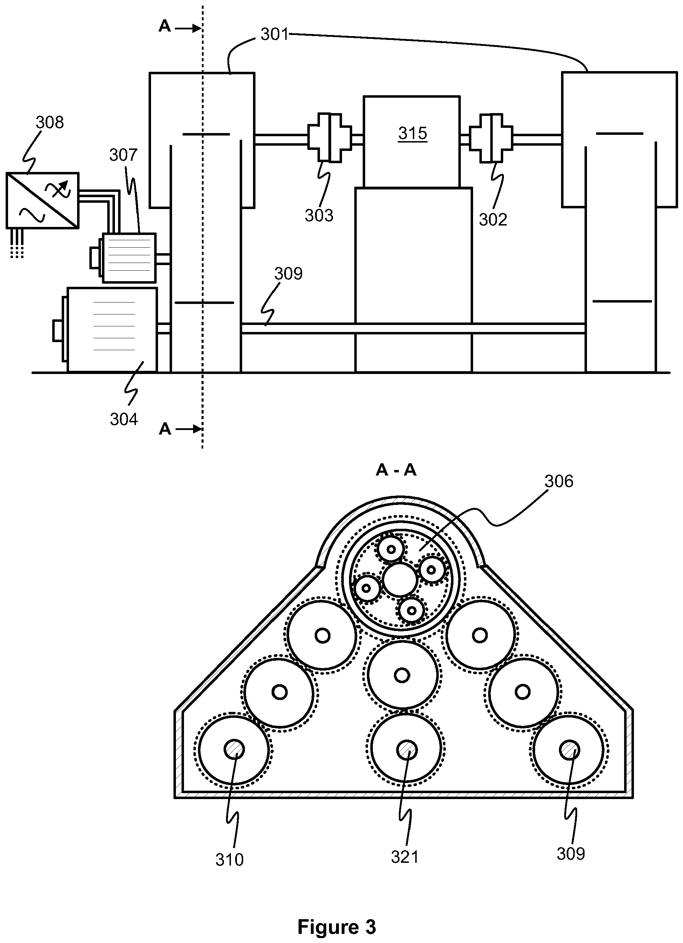

Figure 3 shows a schematic illustration of a test rig according to an embodiment of the invention for testing a gearbox 315. The upper part of figure 3 shows a side view of the test rig where the gearbox 315 is in the testing position. The lower part of figure 3 shows the section taken along the line A-A shown in the upper part of figure 3. The test rig comprises a gear system 301 and power transmission shafts 309, 310, and 321. The gear system comprises rotatable connection interfaces 302 and 303, e.g. flanges, suitable for being connected to input and output shafts of the gearbox 315 under test. The gear system 301 and the power transmission shafts 309, 310, and 321 constitute together with the gearbox 315 three parallel mechanical closed power loops. The test rig comprises also drive motors arranged to drive the mechanical closed power loops. Figure 3 shows a drive motor 304 that is one of the drive motors. It is possible to have a drive motor at both ends of each of the power transmission shafts 309, 310, and 321. In this case, there would be six drive motors in total. Furthermore, the test rig comprises loading equipment for imposing test torque to the gearbox 215 under test. The loading equipment comprises a differential gear stage 306 shown in the section A-A where gear teeth are depicted with dashed lines. The differential gear stage 306 is similar to the differential gear stage 106 shown in figure 1. The test rig further comprises an electrical machine 307 that is connected to the planet-wheel carrier of the differential gear stage 306. The electrical machine 307 is supplied and controlled with an electrical converter device 308.

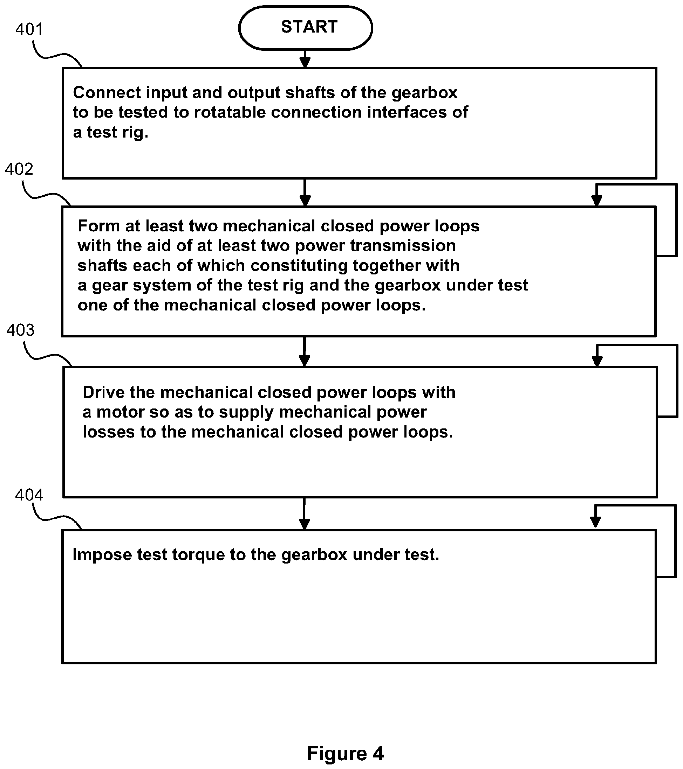

Figure 4 shows a flow chart of a method according to an embodiment of the invention for testing a gearbox. The method comprises:
- action 401: connecting input and output shafts of the gearbox under test to rotatable connection interfaces of a test rig,
- action 402: forming at least two mechanical closed power loops with the aid of at least two power transmission shafts constituting, together with a gear system of the test rig and the gearbox under test, the at least two mechanical closed power loops,
- action 403: driving the at least two mechanical closed power loops so as to supply mechanical power losses to the mechanical closed power loops, and
- action 404: imposing test torque to the gearbox under test.

A method according to an embodiment of the invention further comprises adapting the gear ratio of the test rig to correspond to the gear ratio of the gearbox under test with the aid of a differential gear stage having first and second rotatable elements which form part of the mechanical closed power loops and whose mutual rotational speed difference depends on rotational speed of a third rotatable element of the differential gear stage. In the method according to this embodiment of the invention, the test torque is imposed to the gearbox under test by controlling the torque acting on the third rotatable element when the third rotatable element is rotating.

In a method according to an embodiment of the invention, the torque acting on the third rotatable element is controlled with a system comprising:
- an electrical machine, and
- an electrical converter device that controls the electrical machine on the basis of a difference between the torque of the electrical machine and a reference torque.

The differential gear stage can be, for example, a planetary gear so that the sun gear shaft and a gear ring of the planetary gear are the first and second rotatable elements, respectively, and a planet-wheel carrier of the planetary gear is the third rotatable element. The electrical machine can be an alternating current electrical machine and the electrical converter device can be a frequency converter.

In a method according to an embodiment of the invention, the reference torque is changed in response to a situation in which the rotational speed of the electrical machine meets an upper speed limit or a lower speed limit. The reference torque is changed in the direction that the rotational speed is returned to a speed window defined with the upper and lower speed limits.

In a method according to an embodiment of the invention, the mechanical closed power loops are driven with one or more electrical motors and rotational speed of the electrical motors is controlled on the basis of a difference between the rotational speed of the electrical motors and a reference speed. The electrical motors can be alternating current electrical motors that are supplied and controlled with a frequency converter.

The specific examples provided in the description given above should not be construed as limiting. Therefore, the invention is not limited merely to the embodiments described above.

## Claims

1. A test rig for testing a gearbox, the test rig comprising:
- a gear system (101, 201, 301) comprising rotatable connection interfaces (102, 103, 202, 203, 302, 303) suitable for being connected to input and output shafts of the gearbox under test,
- at least one drive motor (104, 105, 204, 205, 304) for driving the gear system and the gearbox under test, and
- loading equipment (106, 107, 108, 217, 219, 306-308) for imposing test torque to the gearbox under test,
**characterized in that** the test rig further comprises at least two power transmission shafts (109, 110, 209, 210, 309, 310, 321) constituting, together with the gear system and the gearbox under test, at least two mechanical closed power loops when the gearbox under test is connected to the rotatable connection interfaces, the at least two mechanical closed power loops being formed when the gearbox under test is the only device under test connected to the test rig and only one input shaft of the gearbox under test and only one output shaft of the gearbox under test are connected to the rotatable connection interfaces of the gear system.

2. A test rig according to claim 1, wherein the loading equipment comprises:
- at least one differential gear stage (106, 306) comprising first and second rotatable elements (111, 112) which form part of the mechanical closed power loops and whose mutual rotational speed difference depends on rotational speed of a third rotatable element (113) of the differential gear stage, and
- a controlling device (107, 108, 307, 308) connected to the third rotatable element of the differential gear stage and arranged to control torque acting on the third rotatable element when the third rotatable element is rotating.

3. A test rig according to claim 2, wherein the differential gear stage (106, 306) is a planetary gear, a sun gear shaft and a gear ring of the planetary gear being the first and second rotatable elements and a planet-wheel carrier of the planetary gear being the third rotatable element.

4. A test rig according to claim 2, wherein the controlling device comprises an electrical machine (107, 307) and an electrical converter device (108, 308) arranged to control the electrical machine on the basis of a difference between the torque of the electrical machine and a reference torque.

5. A test rig according to claim 4, wherein the electrical converter device is arranged to change the reference torque in response to a situation in which the rotational speed of the electrical machine meets an upper speed limit or a lower speed limit, the reference torque being changed in a direction that the rotational speed is returned to a speed window defined with the upper and lower speed limits.

6. A test rig according to any of claims 4 or 5, wherein the drive motor (104, 105) is an electrical motor and the test rig comprises another electrical converter device (114) arranged to control rotational speed of the electrical motor on the basis of a difference between the rotational speed of the electrical motor and a reference speed.

7. A test rig according to any of claims 4-6, wherein the electrical machine of the controlling device is an alternating current electrical machine and the electrical converter device of the controlling device is a frequency converter.

8. A test rig according to any of claim 6, wherein the drive motor is an alternating current electrical motor and the other electrical converter device (114) is a frequency converter.

9. A method for testing a gearbox, the method comprising:
- connecting (401) input and output shafts of the gearbox under test to rotatable connection interfaces of a test rig,
- driving (403) the test rig and the gearbox under test, and
- imposing (404) test torque to the gearbox under test,
**characterized in that** the method further comprises forming (402) at least two mechanical closed power loops with the aid of at least two power transmission shafts constituting, together with a gear system of the test rig and the gearbox under test, the at least two mechanical closed power loops, the at least two mechanical closed power loops being formed when the gearbox under test is the only device under test connected to the test rig and only one input shaft of the gearbox under test and only one output shaft of the gearbox under test are connected to the rotatable connection interfaces of the test rig.

10. A method according to claim 9, wherein the method further comprises adapting the gear ratio of the test rig to correspond to the gear ratio of the gearbox under test with the aid of at least one differential gear stage having first and second rotatable elements which form part of the mechanical closed power loops and whose mutual rotational speed difference depends on rotational speed of a third rotatable element of the differential gear stage, and wherein the test torque is imposed to the gearbox under test by controlling torque acting on the third rotatable element when the third rotatable element is rotating.

11. A method according to claim 10, wherein the differential gear stage is a planetary gear, a sun gear shaft and a gear ring of the planetary gear being the first and second rotatable elements and a planet-wheel carrier of the planetary gear being the third rotatable element.

12. A method according to claim 10, wherein the torque acting on the third rotatable element is controlled with a system comprising an electrical machine and an electrical converter device that controls the electrical machine on the basis of a difference between the torque of the electrical machine and a reference torque.

13. A method according to claim 12, wherein the reference torque is changed in response to a situation in which the rotational speed of the electrical machine meets an upper speed limit or a lower speed limit, the reference torque being changed in a direction that the rotational speed is returned to a speed window defined with the upper and lower speed limits.

14. A method according to any of claims 9-13, wherein the mechanical closed power loops are driven with one or more electrical motors and rotational speed of the electrical motors is controlled on the basis of a difference between the rotational speed of the electrical motors and a reference speed.

15. A method according to any of claims 12-14, wherein the electrical machine is an alternating current electrical machine and the electrical machine is controlled with a frequency converter.

## Patentansprüche

1. Prüfstand zum Prüfen eines Getriebes, wobei der Prüfstand Folgendes umfasst:
- ein Getriebesystem (101, 201, 301), das drehbare Verbindungsschnittstellen (102, 103, 202, 203, 302, 303) umfasst, die zur Verbindung mit Eingangs- und Ausgangswellen des zu prüfenden Getriebes geeignet sind,
- mindestens einen Antriebsmotor (104, 105, 204, 205, 304) zum Antreiben des Getriebesystems und des zu prüfenden Getriebes, und
- Ladeausrüstung (106, 107, 108, 217, 219, 306-308) zum Aufbringen eines Prüfdrehmoments auf das zu prüfende Getriebe,
**dadurch gekennzeichnet, dass** der Prüfstand ferner mindestens zwei Kraftübertragungswellen (109, 110, 209, 210, 309, 310, 321) umfasst, die gemeinsam mit dem Getriebesystem und dem zu prüfenden Getriebe mindestens zwei mechanische geschlossene Leistungsschleifen bilden, wenn das zu prüfende Getriebe mit den drehbaren Verbindungsschnittstellen verbunden ist, wobei die mindestens zwei mechanischen geschlossenen Leistungsschleifen gebildet werden, wenn das zu prüfende Getriebe die einzige zu prüfende Vorrichtung ist, die mit dem Prüfstand verbunden ist und nur eine Eingangswelle des zu prüfenden Getriebes und nur eine Ausgangswelle des zu prüfenden Getriebes mit den drehbaren Verbindungsschnittstellen des Getriebesystems verbunden ist.

2. Prüfstand nach Anspruch 1, wobei die Ladeausrüstung Folgendes umfasst:
- mindestens eine Differenzialgetriebestufe (106, 306), die erste und zweite drehbare Elemente (111, 112) umfasst, welche Bestandteil der mechanischen geschlossenen Leistungsschleifen sind und deren gegenseitige Drehzahldifferenz von der Drehzahl eines dritten drehbaren Elements (113) der Differenzialgetriebestufe abhängt, und
- eine Steuervorrichtung (107, 108, 307, 308), die mit dem dritten drehbaren Element der Differenzialgetriebestufe verbunden ist und angeordnet ist, ein auf das dritte drehbare Element wirkendes Drehmoment zu steuern, wenn sich das dritte drehbare Element dreht.

3. Prüfstand nach Anspruch 2, wobei die Differenzialgetriebestufe (106, 306) ein Planetengetriebe ist, wobei eine Sonnenradwelle und ein Zahnkranz des Planetengetriebes das erste und zweite drehbare Element sind und ein Planetenradträger des Planetengetriebes das dritte drehbare Element ist.

4. Prüfstand nach Anspruch 2, wobei die Steuervorrichtung eine elektrische Maschine (107, 307) und eine elektrische Wandlervorrichtung (108, 308), die angeordnet ist, die elektrische Maschine auf Grundlage einer Differenz zwischen dem Drehmoment der elektrischen Maschine und einem Bezugsdrehmoment zu steuern, umfasst.

5. Prüfstand nach Anspruch 4, wobei die elektrische Wandlervorrichtung angeordnet ist, das Bezugsdrehmoment als Reaktion auf eine Situation, in welcher die Drehzahl der elektrischen Maschine eine obere Drehzahlbegrenzung oder eine untere Drehzahlbegrenzung erreicht, zu ändern, wobei das Bezugsdrehmoment in eine Richtung geändert wird, in der die Drehzahl in ein Drehzahlfenster zurückgesetzt wird, das von den oberen und unteren Drehzahlbegrenzungen definiert wird.

6. Prüfstand nach einem der Ansprüche 4 oder 5, wobei der Antriebsmotor (104, 105) ein Elektromotor ist und der Prüfstand eine weitere elektrische Wandlervorrichtung (114) umfasst, die angeordnet ist, eine Drehzahl des Elektromotors auf Grundlage einer Differenz zwischen der Drehzahl des Elektromotors und einer Bezugsdrehzahl zu steuern.

7. Prüfstand nach einem der Ansprüche 4 bis 6, wobei die elektrische Maschine der Steuervorrichtung eine elektrische Wechselstrommaschine ist und die elektrische Wandlervorrichtung der Steuervorrichtung ein Frequenzwandler ist.

8. Prüfstand nach Anspruch 6, wobei der Antriebsmotor ein elektrischer Wechselstrommotor ist und die weitere elektrische Wandlervorrichtung (114) ein Frequenzwandler ist.

9. Verfahren zur Prüfung eines Getriebes, wobei das Verfahren Folgendes umfasst:
- Verbinden (401) von Eingangs- und Ausgangswellen des zu prüfenden Getriebes mit drehbaren Verbindungsschnittstellen eines Prüfstandes,
- Antreiben (403) des Prüfstandes und des zu prüfenden Getriebes, und
- Aufbringen (404) eines Prüfdrehmoments auf das zu prüfende Getriebe,
**dadurch gekennzeichnet, dass** das Verfahren ferner das Bilden (402) von mindestens zwei mechanischen geschlossenen Leistungsschleifen mit Hilfe von mindestens zwei Kraftübertragungswellen, die gemeinsam mit einem Getriebesystem des Prüfstandes und dem zu prüfenden Getriebe die mindestens zwei mechanischen geschlossenen Leistungsschleifen bilden, umfasst, wobei die mindestens zwei mechanischen geschlossenen Leistungsschleifen gebildet werden, wenn das zu prüfenden Getriebe die einzige zu prüfende Vorrichtung ist, die mit dem Prüfstand verbunden ist und nur eine Eingangswelle des zu prüfenden Getriebes und nur eine Ausgangswelle des zu prüfenden Getriebes mit den drehbaren Verbindungsschnittstellen des Prüfstandes verbunden ist.

10. Verfahren nach Anspruch 9, wobei das Verfahren ferner mit Hilfe von mindestens einer Differenzialgetriebestufe, die erste und zweite drehbare Elemente aufweist, welche Bestandteil der mechanischen geschlossenen Leistungsschleifen eines dritten Elements der Differenzialgetriebestufe sind, das Anpassen des Übersetzungsverhältnisses des Prüfstandes umfasst, um mit dem Übersetzungsverhältnis des zu prüfenden Getriebes übereinzustimmen, und wobei das Prüfdrehmoment durch Steuern eines Drehmoments, das auf das dritte drehbare Element wirkt, wenn sich das dritte Element dreht, auf das zu prüfende Getriebe angewendet wird.

11. Verfahren nach Anspruch 10, wobei die Differenzialgetriebestufe ein Planetengetriebe ist, wobei eine Sonnenradwelle und ein Zahnkranz des Planetengetriebes das erste und zweite drehbare Element sind und ein Planetenradträger des Planetengetriebes das dritte drehbare Element ist.

12. Verfahren nach Anspruch 10, wobei das Drehmoment, das auf das dritte drehbare Element einwirkt, mit einem System gesteuert wird, das eine elektrische Maschine und eine elektrische Wandlervorrichtung umfasst, die die elektrische Maschine auf Grundlage einer Differenz zwischen dem Drehmoment der elektrischen Maschine und einem Bezugsdrehmoment steuert.

13. Verfahren nach Anspruch 12, wobei das Bezugsdrehmoment als Reaktion auf eine Situation, in welcher die Drehzahl der elektrischen Maschine eine obere Drehzahlbegrenzung oder eine untere Drehzahlbegrenzung erreicht, geändert wird, wobei das Bezugsdrehmoment in eine Richtung geändert wird, in der die Drehzahl in ein Drehzahlfenster zurückgesetzt wird, das von den oberen und unteren Drehzahlbegrenzungen definiert wird.

14. Verfahren nach einem der Ansprüche 9 bis 13, wobei die mechanischen geschlossenen Leistungsschleifen mit einem oder mehreren Elektromotoren angetrieben werden und die Drehzahl der Elektromotoren auf Grundlage einer Differenz zwischen der Drehzahl der Elektromotoren und einer Bezugsdrehzahl gesteuert wird.

15. Verfahren nach einem der Ansprüche 12 bis 14, wobei die elektrische Maschine eine elektrische Wechselstrommaschine ist und die elektrische Maschine mit einem Frequenzwandler gesteuert wird.

## Revendications

1. Banc d'essai destiné à tester une boîte de vitesses, le banc d'essai comprenant :
- un système d'engrenages (101, 201, 301) comprenant des interfaces de connexion rotatives (102, 103, 202, 203, 302, 303) adaptées pour être reliées à des arbres d'entrée et de sortie de la boîte de vitesses testée,
- au moins un moteur d'entraînement (104, 105, 204, 205, 304) destiné à entraîner le système d'engrenages et la boîte de vitesses testée, et
- des équipements de chargement (106, 107, 108, 217, 219, 306-308) destinés à imposer un couple de test à la boîte de vitesses testée,
**caractérisé en ce que** le banc d'essai comprend en outre au moins deux arbres de transmission de puissance (109, 110, 209, 210, 309, 310, 321) constituant, ensemble avec le système d'engrenages et la boîte de vitesses testée, au moins deux boucles de puissance fermées mécaniques lorsque la boîte de vitesses testée est reliée aux interfaces de connexion rotatives, les au moins deux boucles de puissance fermées mécaniques étant formées lorsque la boîte de vitesses testée est le seul dispositif testé relié au banc d'essai et que seul un arbre d'entrée de la boîte de vitesses testée et seul un arbre de sortie de la boîte de vitesses testée sont reliés aux interfaces de connexion rotatives du système d'engrenages.

2. Banc d'essai selon la revendication 1, dans lequel les équipements de charge comprennent :
- au moins un niveau d'engrenage différentiel (106, 306) comprenant des premier et deuxième éléments rotatifs (111, 112) faisant partie des boucles de puissance fermées mécaniques et dont la différence de vitesse de rotation mutuelle dépend d'une vitesse de rotation d'un troisième élément rotatif (113) du niveau d'engrenage différentiel, et
- un dispositif de commande (107, 108, 307, 308) relié au troisième élément rotatif du niveau d'engrenage différentiel et conçu pour commander le couple de commande agissant sur le troisième élément rotatif lorsque le troisième élément rotatif est en rotation.

3. Banc d'essai selon la revendication 2, dans lequel lignes de déchirure espacées (109, 111) niveau d'engrenage différentiel (106, 306) est un engrenage planétaire, un arbre d'engrenage solaire et une bague d'engrenage de l'engrenage planétaire étant les premier et deuxième éléments rotatifs et un support de roue planétaire de l'engrenage planétaire étant le troisième élément rotatif.

4. Banc d'essai selon la revendication 2, dans lequel le dispositif de commande comprend une machine électrique (107, 307) et un dispositif convertisseur électrique (108, 308) conçu pour commander la machine électrique sur la base d'une différence entre le couple de la machine électrique et un couple de référence.

5. Banc d'essai selon la revendication 4, dans lequel le dispositif convertisseur électrique est conçu pour modifier le couple de référence en réponse à une situation dans laquelle la vitesse de rotation de la machine électrique atteint une limite de vitesse supérieure ou un limite de vitesse inférieure, le couple de référence étant modifié dans une direction de manière à ce que la vitesse de rotation revienne dans une plage de vitesse définie avec les limites de vitesse supérieure et inférieure.

6. Banc d'essai selon l'une quelconque des revendications 4 ou 5, dans lequel le moteur d'entraînement (104, 105) est un moteur électrique et le banc d'essai comprend un autre dispositif convertisseur électrique (114) conçu pour commander la vitesse de rotation du moteur électrique sur la base d'une différence entre la vitesse de rotation du moteur électrique et une vitesse de référence.

7. Banc d'essai selon l'une quelconque des revendications 4 à 6, dans lequel la machine électrique du dispositif de commande est une machine électrique à courant alternatif et le dispositif convertisseur électrique du dispositif de commande est un convertisseur de fréquence.

8. Banc d'essai selon la revendication 6, dans lequel le moteur d'entraînement est un moteur électrique à courant alternatif et l'autre dispositif convertisseur électrique (114) est un convertisseur de fréquence.

9. Procédé de test d'une boîte de vitesses, le procédé comprenant :
- la connexion (401) d'arbres d'entrée et de sortie de la boîte de vitesses testée à des interfaces de connexion rotatives d'un banc d'essai,
- l'entraînement (403) du banc d'essai et de la boîte de vitesses testée, et
- la soumission (404) de la boîte de vitesses testée à un couple de test,
**caractérisé en ce que** le procédé comprend en outre la formation (402) d'au moins deux boucles de puissance fermées mécaniques à l'aide d'au moins deux arbres de transmission de puissance constituant les au moins deux boucles de puissance fermées mécaniques ensemble avec le système d'engrenages du banc d'essai et la bloc de culasse (1) testée, les au moins deux boucles de puissance fermées mécaniques étant formées lorsque la boîte de vitesses testée est le seul dispositif testé relié au banc d'essai et seul un arbre d'entrée de la boîte de vitesses testée et seul un arbre de sortie de la boîte de vitesses testée sont reliés aux interfaces de connexion rotatives du banc d'essai.

10. Procédé selon la revendication 9, dans lequel le procédé comprend en outre l'adaptation du rapport d'engrenage du banc d'essai de manière à ce que celui-ci corresponde au rapport d'engrenage de la boîte de vitesses testée à l'aide d'au moins un niveau d'engrenage différentiel présentant des premier et deuxième éléments rotatifs faisant partie des boucles de puissance fermées mécaniques et dont la différence de vitesse de rotation mutuelle dépend d'une vitesse de rotation d'un troisième élément rotatif du niveau d'engrenage différentiel, et dans lequel le couple de test est imposé à la boîte de vitesses testée en commandant le couple agissant sur le troisième élément rotatif lorsque le troisième élément rotatif est en rotation.

11. Procédé selon la revendication 10, dans lequel le niveau d'engrenage différentiel est un engrenage planétaire, un arbre d'engrenage solaire et une bague d'engrenage de l'engrenage planétaire étant les premier et deuxième éléments rotatifs et un support de roue planétaire de l'engrenage planétaire étant le troisième élément rotatif.

12. Procédé selon la revendication 10, dans lequel le couple agissant sur le troisième élément rotatif est commandé à l'aide d'un système comprenant une machine électrique et un dispositif convertisseur électrique commandant la machine électrique sur la base d'une différence entre le couple de la machine électrique et un couple de référence.

13. Procédé selon la revendication 12, dans lequel le couple de référence est modifié en réponse à une situation dans laquelle la vitesse de rotation de la machine électrique atteint une limite de vitesse supérieure ou une limite de vitesse inférieure, le couple de référence étant modifié dans une direction de manière à ce que la vitesse de rotation revienne dans une plage de vitesse définie avec les limites de vitesse supérieure et inférieure.

14. Procédé selon l'une quelconque des revendications 9 à 13, dans lequel les boucles de puissance fermées mécaniques sont entraînées avec un ou plusieurs moteurs électriques et la vitesse de rotation des moteurs électriques est commandée sur la base d'une différence entre la vitesse de rotation des moteurs électriques et une vitesse de référence.

15. Procédé selon l'une quelconque des revendications 12 à 14, dans lequel la machine électrique est une machine électrique à courant alternatif et la machine électrique est commandée avec un convertisseur de fréquence.
